# EUROPEAN PATENT APPLICATION

(11) **EP 4 527 950 A1**
(43) Date of publication of application: **26.03.2025**
(21) Application number: 23827047.4
(22) Date of filing: 13.06.2023
(51) Int. Cl.: C21D 8/12, C22C 38/00, C22C 38/60, H01F 1/147

(54) **METHOD FOR PRODUCING ELECTROMAGNETIC STEEL SHEET, AND COLD-ROLLED SHEET**

(30) Priority: 20.06.2022 JP 2022099174
(71) Applicant: JFE Steel Corporation, Tokyo 100-0011 (JP)
(72) Inventor: IMAMURA Takeshi, Tokyo 100-0011 (JP); OKUBO Tomoyuki, Tokyo 100-0011 (JP)
(74) Representative: Grünecker Patent- und Rechtsanwälte PartG mbB
(86) International application number: PCT/JP2023/021838
(87) International publication number: WO 2023/248861

(57) **Abstract**

Provided is a method for producing an electrical steel sheet having excellent magnetic properties by heating a steel slab containing, by mass%, C: 0 to 0.100%, Si: 1.00 to 5.00%, Mn: 0 to 1.00%, P: 0 to 0.02%, Al: 0 to 2.00%, N: 0 to 0.010%, S: 0 to 0.010%, Se: 0 to 0.010%, Ti: 0 to 0.100%, Nb: 0 to 0.100%, V: 0 to 0.100% and at least one of Sn and Sb: 0 to 0.200% in total to 1300°C or lower, hot rolling to form a hot-rolled sheet, subjecting the hot-rolled sheet to hot-band annealing and cold rolling to form a cold-rolled steel sheet having a final sheet thickness, and subjecting the cold-rolled sheet to finishing annealing, wherein a difference in the amount of strain between grain boundary vicinity and grain interior in worked grains of the steel sheet after the cold rolling is made within a given value to preferentially develop crystal grains of particular orientation without damaging grain growability of recrystallized grains, and a cold-rolled sheet used in this production method.

## Description

### Technical Field

This invention relates to a method for producing an electrical steel sheet having excellent magnetic properties and mainly used for an iron core in a motor, transformer or the like, and a cold-rolled sheet cold-rolled to a final thickness to be used in the method.

### Background Art

Recently, the reduction of energy consumption has been required in various technical fields from the viewpoint of global environmental protection and cost reduction. Accordingly, electrical steel sheets used in an iron core for a motor, transformer or the like have also been strongly demanded to reduce iron loss and increase magnetic flux density. In order to reduce iron loss, it is effective to increase the content of an ingredient such as Si, Al or the like which increases the specific resistance of steel. When the specific resistance is increased, the steel sheet is magnetized to reduce an eddy current loss. However, the addition of a large amount of Si, Al or the like would reduce the magnetic flux density, causing a new problem such that the torque of the motor decreases or the iron loss increases.

To deal with this situation, studies have been actively conducted to improve the magnetic flux density of a steel sheet by improving the texture thereof. Since there is a crystal orientation dependence in the magnetization behavior of iron, in order to increase the magnetic flux density, it is effective to increase the <001> orientation, which is the magnetization easy axis, in a direction parallel to the sheet surface, that is, to have a texture containing a large amount of {100} faces parallel to the sheet surface developed.

As a method for developing the texture described above, for example, Patent Literature 1 proposes a method of performing a warm rolling with an Al content reduced as low as possible, and Patent Literature 2 proposes a method of adding P to steel and also performing a batch annealing at a low temperature for a long time before cold rolling.

### Citation List

### Patent Literature

Patent Literature 1: JP-A-2002-003944
Patent Literature 2: JP-A-2005-200756

### Summary of Invention

### Technical Problem

As described above, since the magnetization behavior of steel is orientation-dependent, there is a certain degree of ideal crystal orientation that can provide good magnetic properties. However, the inventors' study shows that when crystal grains with the same crystal orientation are preferentially made to develop, the grain growability in recrystallization annealing is prone to be reduced. In order to provide good magnetic properties, crystal grains of a certain size are required, and thus the reduction of magnetic properties is one of the factors that reduce the crystal growability.

In reality, however, the prior art including Patent Literature 1 and Patent Literature 2 hardly considers the above problems and countermeasures thereof.

Having been contrived in view of these problems of the prior art, the present invention aims to propose a method for producing an electrical steel sheet capable of preferentially developing crystal grains of a specific orientation without impairing the grain growability of recrystallized grains and to provide a cold-rolled sheet cold-rolled to a final sheet thickness to be used in the production method.

### Solution of Problem

As a result of vigorously conducting studies on a method for solving the above problems, the inventors found that the deterioration of the grain growability during recrystallization can be effectively suppressed by removing as much as possible fine precipitate-forming elements included in a raw steel material to be used in the production of an electrical steel sheet while providing a difference between the grain boundary vicinity and the grain interior, in the amount of strain within a rolled texture (worked grains) formed by the cold rolling to a final sheet thickness, thereby improving the magnetic properties of a product sheet. Thus, the present invention was achieved.

The invention proposes a method for producing an electrical steel sheet comprising steps of heating a steel slab having an ingredient composition comprising C: 0 to 0.100 mass%, Si: 1.00 to 5.00 mass%, Mn: 0 to 1.00 mass%, P: 0 to 0.02 mass%, Al: 0 to 2.00 mass%, N: 0 to 0.010 mass%, S: 0 to 0.010 mass%, Se: 0 to 0.010 mass%, Ti: 0 to 0.100 mass%, Nb: 0 to 0.100 mass%, V: 0 to 0.100 mass%, at least one selected from Sn and Sb: 0 to 0.200 mass% in total, and the balance being Fe and inevitable impurities to a temperature of 1300°C or lower, hot rolling the slab to form a hot-rolled sheet, subjecting the hot-rolled sheet to hot-band annealing, cold rolling the sheet to form a cold-rolled sheet having a final sheet thickness, and subjecting the cold-rolled sheet to finishing annealing, characterized in that the cold rolling is conducted so that a ratio of G_{b} to G_{g} (G_{b}/G_{g}) is 1.03 or more, wherein: when crystal orientation of a worked grain present in a sheet thickness section of the cold-rolled sheet having the final sheet thickness is measured using an EBSD method, K₁ (°) denotes an orientation difference between an arbitrary measurement point and a first neighboring measurement point; K₂ (°) denotes an orientation difference between the same arbitrary measurement point and a second neighboring measurement point; G (°) denotes a difference (K₂ -K₁) between K₁ and K₂; G_{b} (°) denotes a value corresponding to G in a grain boundary vicinity; and G_{g} (°) denotes a value corresponding to G in a grain interior. Here, the term "worked grain" refers to a crystal grain that has been flattened by cold rolling and been thus elongated in the rolling direction; the term "grain boundary vicinity" refers to an area of 2.5 µm in the direction perpendicular to the steel sheet surface and 50 µm in the direction parallel to the steel sheet surface, originating from the grain boundary parallel to the steel sheet surface within the worked grain present in the thickness cross-section of the cold-rolled sheet; and "grain interior" refers to an area of 5 µm in a direction perpendicular to the steel sheet surface and 50 µm in a direction parallel to the steel sheet surface, including the center point of the worked grain.

The method for producing an electrical steel sheet according to the invention is characterized in that the cold rolling to obtain the final sheet thickness is conducted by combining unidirectional rolling with reverse rolling.

The method for producing an electrical steel sheet according to the invention is also characterized in that the cold rolling to obtain the final sheet thickness is conducted by combining an aging treatment conducted within a temperature range of 20 to 300°C and reverse rolling.

Furthermore, the present invention is a cold-rolled sheet that is used in a production of an electrical steel sheet and cold-rolled to a final sheet thickness, characterized in that a ratio of G_{b} to G_{g} (G_{b}/G_{g}) is 1.03 or more, wherein: when crystal orientation of a worked grain present in a sheet thickness section is measured using an EBSD method, K₁ (°) denotes an orientation difference between an arbitrary measurement point and a first neighboring measurement point; K₂ (°) denotes an orientation difference between the same arbitrary measurement point and a second neighboring measurement point; G (°) denotes a difference (K₂ -K₁) between K₁ and K₂; G_{b} (°) denotes a value corresponding to G in a grain boundary vicinity; and G_{g} (°) denotes a value corresponding to G in a grain interior. Here, the term "worked grain" refers to a crystal grain that has been flattened by cold rolling and been thus elongated in the rolling direction; the term "grain boundary vicinity" refers to an area of 2.5 µm in the direction perpendicular to the steel sheet surface and 50 µm in the direction parallel to the steel sheet surface, originating from the grain boundary parallel to the sheet surface within the worked grain present in the thickness cross-section of the cold-rolled sheet; and "grain interior" refers to an area of 5 µm in a direction perpendicular to the steel sheet surface and 50 µm in a direction parallel to the steel sheet surface, including the center point of the worked grain.

### Advantageous Effects of Invention

The present invention can eliminate the precipitate-forming elements from a raw steel material used in the production of an electrical steel sheet as much as possible and also apply a large difference in the amount of strain between the vicinity of the grain boundary and the grain interior of the crystal grains present in the steel sheet after the cold rolling, which can effectively suppress the decrease in the grain growability in recrystallization. Therefore, the present invention can stably provide an electrical steel sheet having excellent magnetic properties.

### Brief Description of Drawings

[Fig. 1] is a graph showing a relation between cold rolling conditions and iron loss W_{15/50} of a product sheet.
[Fig. 2] is a graph showing a relation among cold rolling conditions, G_{b}/G_{g} of a cold-rolled sheet, and a grain size of a product sheet.
[Fig. 3] is a schematic view of a grain boundary vicinity and grain interior in a worked grain.

### Description of Embodiments

Firstly, an experiment leading to the invention will be explained.

A steel slab having an ingredient composition comprising C: 0.002 mass%, Si: 3.02 mass%, Mn: 0.10 mass% and the balance being Fe and inevitable impurities was heated to 1100°C and hot-rolled to form a hot-rolled sheet having a sheet thickness of 2.3 mm. The hot-rolled sheet was then pickled for descaling and subjected to hot-band annealing at 1100°C for 10 seconds. The structure of the steel sheet after the hot-band annealing was a recrystallization structure comprised of equiaxed grains and having an average grain size of about 400 µm. The steel sheet after the hot-band annealing was then subjected to 15 passes of cold rolling using a Sendzimir mill to produce a cold-rolled sheet having a final sheet thickness of 0.30 mm. In this case, the cold rolling was performed under 4 conditions A to D as shown in Table 1. In all the conditions, the rolling reductions in 1 to 15 passes were all adjusted to be the same value. The cold-rolled sheet having the final sheet thickness was then subjected to finishing annealing at 1000°C for 20 seconds. Not that "unidirectional rolling" shown in Table 1 refers to a rolling method in which the rolling direction is the same in each pass and "reverse rolling" refers to a rolling method in which the rolling direction is reversed in each pass (the same applies below).

**Table 1**

| Condition | Cold Rolling Conditions |
|---|---|
| A | Unidirectional rolling (15 passes) |
| B | Reverse rolling (15 passes) |
| C | Unidirectional rolling (10 passes) → Reverse rolling (5 passes) |
| D | Unidirectional rolling (3 passes) → Reverse rolling (3 passes) → Unidirectional rolling (3 passes) →Reverse rolling (3 passes) →Unidirectional rolling (3 passes) |

A test specimen for magnetic measurement was taken from the resulting steel sheet subjected to finishing annealing, and the iron loss W_{15/50} (iron loss when excited at a magnetic flux density of 1.5 T and a frequency of 50 Hz) thereof was measured by a method described in JIS C2550-1 (2011).

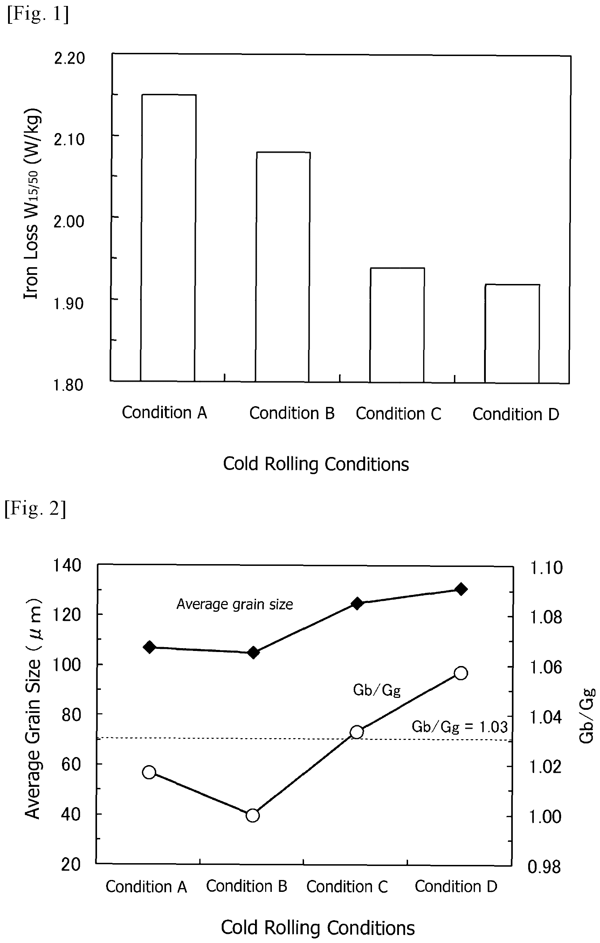

Fig. 1 shows the measurement results of iron loss. Fig. 1 shows that low iron loss values were measured in conditions C and D among the above cold rolling conditions A to D. After an RD-TD surface, or steel sheet surface of the obtained product sheet was etched with a solution of 3 mass% nital, the structure of the steel sheet was photographed with an optical microscope, and the obtained image was analyzed to measure an average crystal grain size equivalent to a circle diameter. The results in Fig. 2 show that the product sheets obtained by cold rolling under conditions C and D have a large average crystal grain size of 110 µm or more.

Normally, a steel sheet before cold rolling has a recrystallization structure of equiaxed grains, while that after cold rolling has a worked structure of crystal grains flattened by rolling to be elongated in the RD direction, and the recrystallized grains produced in finishing annealing come from a region within the steel sheet after the cold rolling having a large amount of strain. In order to examine the cause of the resulting difference in size of the crystal grains in the above product sheets, the inventors conducted studies, focusing on the distribution of strain in the crystal grains that had been flattened by cold rolling. Note that, in the present invention, the crystal grains flattened to be elongated in the rolling direction are also referred to as "worked grains".

Specifically, the inventors conducted a local orientation analysis in the cold-rolled sheets after final cold rolling but before finishing annealing by an EBSD method to compare the amounts of strain in the grain boundary vicinity and in the grain interior of the worked grains. The local orientation analysis was conducted with respect to an RD-ND section (sheet thickness section in the rolling direction) at the widthwise center of the cold-rolled sheet, in which the measurement area was 1000 µm in the RD direction and 300 µm in the ND direction (total sheet thickness) and the step size (measurement interval) was 0.5 µm (hexagonal grid). The apparatus used for the local orientation analysis was a JEOL JSM-7001F scanning electron microscope, and the software for the EBSD measurement system was TSL's OIM Analysis 8.6.

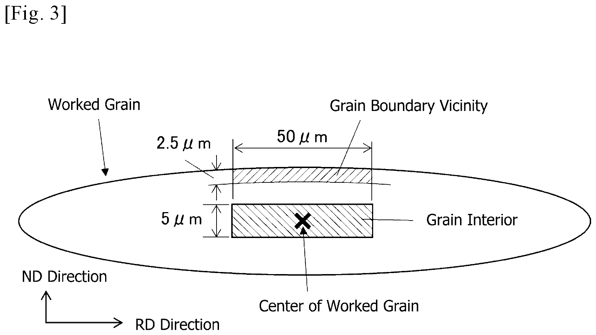

In order to compare the amount of strain in the grain boundary vicinity and the grain interior of the worked grains from the results of the above local orientation analysis, each G value of the grain boundary vicinity and the grain interior was measured with respect to 5 or more worked grains in each region, and G_{b} was determined as the average value of the G values in the grain boundary vicinity while G_{g} was determined as the average value of the G values in the grain interior, wherein, K₁ (°) referred to an orientation difference between an arbitrary measurement point and a first neighboring measurement point; K₂ (°) referred to an orientation difference between the above arbitrary measurement point and a second neighboring measurement point; the orientation differences being measured by the EBSD method; and G (°) was determined as the difference K₂ - K₁ between K₁ and K₂. It should be noted that, in the OIM Analysis software, K₁ is a value referred to as KAM1st and K₂ is a value referred to as KAM2nd. Therefore, G corresponds to a difference between KAM2nd and KAM1st. Moreover, the grain boundary vicinity was defined as an area of 2.5 µm in the ND direction and 50 µm in the RD direction, originating from the grain boundary of the worked grain approximately parallel to the TD direction of the worked grains, as shown in Fig. 3. Also, the grain interior was defined as an area of 5 µm in the ND direction and 50 µm in the RD direction including of the center of the worked grain. In this analysis, the sheet thickness section measured by the EBSD method was a section with the RD direction parallel to the steel sheet surface (RD-ND section, sheet thickness section in the rolling direction) as shown in Fig. 3, but may be a section with the TD direction parallel to the steel sheet surface (TD-ND section, sheet thickness section in the widthwise direction of the sheet).

Next, G_{b}/G_{g}, a ratio of G_{b} of the grain boundary vicinity to G_{g} of the grain interior measured as above was evaluated for each rolling condition to obtain the results shown in Fig. 2. Fig. 2 shows that, in the cold rolling conditions A and B, the G_{b}/G_{g} ratio of the grain boundary vicinity and the grain interior was approximately 1.00, that is, the difference between G_{b} and G_{g} was small. Meanwhile, in the cold rolling conditions C and D, the value of the grain boundary vicinity was high, and the G_{b}/G_{g} ratio was 1.03 or more.

The reason for the large crystal grain size and good magnetic properties in the cold rolling conditions C and D is not yet sufficiently clear, but the inventors consider as follows.

Assuming that the recrystallized grain (recrystallization nucleus) originates from the inside of a worked structure after cold rolling, i.e., from the inside of a worked grain after cold rolling and that the inside of a worked grain is uniformly deformed by the cold rolling, it can be considered that the recrystallization nuclei having the same crystal orientation are produced therefrom. That is, the recrystallized grains having substantially the same orientation are produced from one worked grain with a high possibility. However, these recrystallized grains are small in the difference of grain boundary orientation to the adjacent recrystallized grain, so that the grain boundary energy is considered to be low and the driving force of the grain growth is considered to be low.

Here, the fact that the G value, which is the difference between K₁ and K₂ (K₂ - K₁) as described above, differs in the grain boundary vicinity and the grain interior indicates that there is a difference in the orientation between the first neighboring measurement point and the second neighboring measurement point in both regions, i.e., the deformation behavior differs in both regions and the amount of strain stored also differ. That is, the fact that the G_{b}/G_{g} ratio, a ratio of G between the grain boundary vicinity and the grain interior, is large as in the cold rolling conditions C and D shown in Table 1 means that the deformation behavior differs between the grain boundary vicinity and the grain interior of the worked grain and that the strain amount (strain energy) stored in the grain boundary vicinity is large compared to the grain interior. As a result, the grain growth of recrystallized grains originating from the grain boundary vicinity is considered to be promoted.

Moreover, the G value largely depends on the step size (measurement interval) in the EBSD measurement, and the values of G_{b} and G_{g} largely differ in accordance with the measurement conditions. In the present invention, therefore, the difference in the strain amount is evaluated using the G_{b}/G_{g} ratio without using the values of G_{b} and G_{g}. As described above, the step size affects the G value and is thus preferably in the range of 0.05 to 0.5 µm. More preferably, it is in the range of 0.10 to 0.25 µm.

The present invention is a method of increasing the G_{b}/G_{g} ratio to thereby improve the grain growability in finishing annealing and increase the crystal grain size in a product sheet, thus achieving good magnetic properties. From the viewpoint of further increasing the above effect of the invention, in addition to optimizing the G_{b}/G_{g} ratio, it is preferable to reduce as much as possible the elements included in the raw steel material that form fine precipitates to hinder grain growth. The elements that form fine precipitates include C, Al, N, S, Se, Ti, Nb, and V. In the steel sheet (product sheet) according to the present invention, the average crystal grain size in the RD-TD surface is preferably 110 µm or more, more preferably 120 µm or more.

There will be described the ingredient composition of a raw steel material used in the production of an electrical steel sheet according to the invention.

### C: 0 to 0.100 mass%

As described above, C is a harmful element which forms a carbide and is preferably reduced as much as possible. However, excessive reduction of the C content in a raw steel material (slab) would incur high production costs. Therefore, when the C content can be reduced to 0.005 mass% or less in the production process of an electrical steel sheet, such as in decarburization annealing or the like, it may be contained in some amount in the raw steel material. Therefore, the C content is in the range of 0 to 0.100 mass% in consideration of the decarburization property. The preferable C content is in the range of 0 to 0.005 mass%, which hardly requires decarburization annealing.

### Si: 1.00 to 5.00 mass%

Si is effective in increasing the specific resistance of steel to reduce iron loss. However, when the Si content is less than 1.00 mass%, the above effect is not sufficient, while when it exceeds 5.00 mass%, the workability of the steel deteriorates and it is difficult to conduct cold rolling. Therefore, the Si content is in the range of 1.00 to 5.00 mass%. The Si content is preferably in the range of 2.00 to 4.00 mass%.

### Mn: 0 to 0.50 mass%

Mn forms precipitates of sulfide or selenide and is preferably reduced to the lowest possible level. However, Mn has the effect of improving hot workability and may therefore be contained up to the level of 0.50 mass% which does not inhibit grain growth. The Mn content is preferably in the range of 0 to 0.25 mass%.

### P: 0 to 0.02 mass%

P causes the embrittlement of steel and significantly deteriorates productivity, so that it is preferable to reduce P to the lowest possible level. However, P has the effect of improving the texture after recrystallization and may be therefore contained up to the level of 0.02 mass% which does not inhibit grain growth. Preferably, the P content is preferably in the range of 0 to 0.01 mass%.

### Al: 0 to 2.00 mass%, N: 0 to 0.010 mass%, S: 0 to 0.010 mass%, Se: 0 to 0.010 mass%, Ti: 0 to 0.100 mass%, Nb: 0 to 0.100 mass% and V: 0 to 0.100 mass%

As described above, these elements are harmful elements that form fine precipitates, and it is preferable to reduce the elements to the lowest possible levels. Although excessive reduction of these elements will increase the refining costs, harmful effect on grain growth can be mitigated by coarsening precipitates, such as by lowering the slab heating temperature as described later. Therefore, the above elements may be contained up to each upper limit. As the preferable content, Al is in the range of 0 to 1.20 mass%, and the other elements are in the range of 0 to 0.003 mass%.

### Sn and Sb: at least 0 to 0.200 mass% in total

Sn and Sb are elements that are segregated into a grain boundary to thereby suppress grain growth and are preferably reduced to the lowest possible levels. However, Sn and Sb have the effect of improving recrystallization texture and thus may be contained up to the level of 0.200 mass% which does not develop the above effect of suppressing grain growth. The preferable contents are in the range of 0 to 0.100 mass% in total.

In the raw steel material used in the present invention, the balance other than the above elements is substantially Fe and inevitable impurities.

A method for producing an electrical steel sheet according to the invention will be described below.

A raw steel material (slab) used in the production of an electrical steel sheet according to the present invention can be produced by melting steel adjusted to have the ingredient composition described above by a known refining process using a converter, an electric furnace, a vacuum degassing apparatus, etc., and then subjecting the steel to a usual continuous casting method or ingot casting-blooming method. A thin cast piece having a thickness of 100 mm or less may be also produced from the above molten steel by a direct casting method. These slab and thin cast piece are usually heated to a specified temperature and hot-rolled to form a hot-rolled sheet with a specified sheet thickness or may be hot-rolled directly after casting without reheating. When the slab is heated before hot rolling, the heating temperature is preferably 1100°C or lower. This is considered due to the fact that when the precipitates present in the raw steel material do not cause decomposition/solid solution, coarse and harmless precipitates or inclusions remain, suppressing the subsequent formation of fine precipitates. However, when the content of the precipitate-forming element is small, the heating may be conducted up to about 1300°C. Moreover, the hot rolling followed by the above slab heating may be conducted under conventionally well-known conditions and is not particularly limited.

It is preferable that the steel sheet obtained by the hot rolling (hot-rolled sheet) be subjected to hot-band annealing, as required. When hot-band annealing is conducted, it is preferable to hold the sheet in the temperature range of 800°C to 1300°C inclusive for 5 seconds or longer. When the annealing temperature is lower than 800°C, a rolled texture (band texture) formed by hot rolling may remain without recrystallization to inhibit recrystallization in finishing annealing after cold rolling. On the other hand, when the annealing temperature exceeds 1300°C, the oxidized scale on the steel sheet surface may start to melt, thus deteriorating productivity.

It is preferable to remove scales, which was formed on the steel sheet surface during the hot rolling, after the hot rolling or after hot-band annealing. As the method for removing scales, any method of chemically removing scales by picking with an acid heated to a high temperature, a method of mechanically removing scales, and a combination thereof may be used.

The hot-rolled sheet after descaling is then subjected to a single cold rolling process or at least two cold rolling processes with an intermediate annealing between each process to form a cold-rolled sheet having a final sheet thickness. In the invention, it is essential to provide a difference in the amount of strain between the grain boundary vicinity and grain interior in crystal grains (worked grains) extending in the rolling direction within the worked texture produced by rolling, during the cold rolling conducted to achieve the final sheet thickness (final cold rolling).

Methods for providing the difference in the amount of strain between the grain boundary vicinity and the grain interior in the worked grains include the method of combining unidirectional rolling with reverse rolling, which was adopted in the above experiment. The combination of unidirectional rolling and reverse rolling may be performed at least once, and the order of the two and the direction of the final pass are not specified.

In addition, a method that combines reverse rolling to be used in Example below and one or more aging treatments carried out between the reverse rolling passes may also be used. The aging treatment is preferably performed under the condition that the sheet is held in a temperature range of 20 to 300°C for 1 hour or more. When the aging treatment is conducted in the above temperature range, light elements such as C and N are segregated in the grain boundary and the deformation behavior between the grain boundary vicinity and the grain interior is changed, thereby easily causing the difference in the amount of strain between the two regions. When the temperature is lower than 20°C, the diffusion rate of elements such as C and N is reduced, causing a long aging time. Meanwhile, the temperature above 300°C may cause recovery. The preferable aging temperature is in the range of 25 to 250°C.

The method of providing a difference in the amount of strain between the grain boundary vicinity and the grain interior of the worked grains may, of course, be a method other than the above-described method.

In the experiments described above and in the examples described below, the rolling reduction of each pass is set to the same value for the unidirectional rolling and reverse rolling, but it is not necessarily the same.

The steel sheet (cold-rolled sheet)having the final sheet thickness after cold rolling is cleaned by degreasing or pickling the steel sheet surface, as required, and then subjected to finishing annealing to form a product sheet. The finishing annealing is preferably performed under the condition that the sheet is held in the temperature range of 750°C to 1100°C inclusive for 5 seconds or more. The preferable temperature range is from 800°C to 1050°C inclusive.

An electrical steel sheet is often used in the state of laminating steel sheets. To secure the insulation property between the laminated steel sheets in such a case, it is preferable to form an insulation coating on the steel sheet surface after finishing annealing. To improve punchability, an organic-type coating is preferably used as the insulation coating, while, to reduce iron loss, a tension-imparting insulation coating that imparts tension to the steel sheet surface may be used. The methods of forming the insulation coating may include roll coating, electrostatic coating, etc., and are not specified.

### Example 1

A steel slab having an ingredient composition comprising C: 0.004 mass%, Si: 3.54 mass%, Mn: 0.05 mass%, and the balance being Fe and inevitable impurities was heated to 1250°C and then hot rolled to form a hot-rolled sheet having a sheet thickness of 2.5 mm. The hot-rolled sheet was pickled to remove scales from the steel sheet surface and then subjected to hot-band annealing at 1050°C for 20 seconds. Then, the steel sheet after the hot-band annealing was subjected to 12 passes of cold rolling using a Sendzimir rolling machine to form a cold-rolled sheet having a final sheet thickness of 0.25 mm. The cold rolling was conducted in three conditions E to G as shown in Table 2. Under all conditions, the rolling reduction was adjusted to the same value in each of the 1 to 12 passes. The cold-rolled sheet was then subjected to finishing annealing at 1025°C for 10 seconds in a dry atmosphere of 10 vol% H₂ + 90 vol% N₂ to form a product sheet.

**Table 2**

| Condition | Cold Rolling Conditions | Cold-rolled Sheet | Product Sheet | | Remarks |
|---|---|---|---|---|---|
| | | G_{b}/G_{g} | Grain Size (µm) | Iron Loss W_{15/50} (W/kg) | |
| E | Reverse Rolling(12 passes) | 0.99 | 98 | 2.22 | Comparative Example |
| F | Reverse Rolling(5passes)→Aging at 20°C for 480hr →Reverse Rolling(7 passes) | 1.04 | 116 | 1.85 | Invention Example |
| G | Reverse Rolling(3 passes) → Aging at 20°C for 120hr → Reverse Rolling(3 passes) → Aging at 20°C for 120hr → Reverse Rolling(3 passes) → Aging at 20°C for 120hr → Reverse Rolling(3 passes) | 1.05 | 120 | 1.82 | Invention Example |

The steel sheets thus obtained after finishing annealing (product sheets) and the steel sheets before finishing annealing (after the final cold rolling) were subjected to the following evaluation tests.

### (1) Magnetic properties

A test specimen for magnetic measurement was taken from the product sheet to measure the iron loss W_{15/50} (iron loss at a magnetic flux density of 1.5 T excitation and a frequency of 50 Hz) by a method described in JIS C2550-1 (2011).

### (2) Average grain size

A test specimen was taken from the product sheet to investigate a crystal grain size. The surface of the test specimen of the steel sheet was etched with a solution of 3 mass% nital to develop crystal grains, which were imaged using an optical microscope. The image was subjected to image analysis to measure an average grain size equivalent to a circle diameter.

### (3) Ratio of G_{b}/G_{g}

The cold-rolled sheet after final cold rolling but before finishing annealing was subjected to local orientation analysis by the EBSD method. The local orientation analysis was conducted on an RD-ND section (sheet thickness section in the rolling direction) at the widthwise center of the sheet, where the measurement area was 1000 µm in the RD direction and 250 µm in the ND direction (total sheet thickness) and the step size (measurement interval) was 0.50 µm (hexagonal grid). The apparatus used for the local orientation analysis was a JEOL JSM-7001F scanning electron microscope, and the software for the EBSD measuring system was TSL's OIM Analysis 8.6.

In order to compare the amount of strain in the grain boundary vicinity and the grain interior of the worked grains from the results of the above local orientation analysis, each G value of the grain boundary vicinity and the grain interior was measured with respect to 5 or more worked grains in each region, and Gb was determined as an average value of the G values in the grain boundary vicinity while G_{g} was determined as the average value of the G values in the grain interior, thereby obtaining a ratio of G_{b}/G_{g}, wherein K₁ (°) referred to an orientation difference between an arbitrary measurement point and a first neighboring measurement point; K₂ (°) referred to an orientation difference between the above arbitrary measurement point and a second neighboring measurement point, the orientation differences being measured by the EBSD method; and G (°) was determined as the difference K₂ - K₁ between K₁ and K₂. Moreover, the grain boundary vicinity was defined as an area of 2.5 µm in the ND direction and 50 µm in the RD direction, originating from the grain boundary of the worked grain approximately parallel to the TD direction of the worked grains, as shown in Fig. 3. Also, the grain interior was defined as an area of 5 µm in the ND direction and 50 µm in the RD direction including of the center of the worked grain.

The results of the above evaluation test are also shown in Table 2. The results show that the cold-rolled sheets obtained by cold rolling under the conditions adapted to the present invention have a G_{b}/G_{g} ratio of 1.03 or more, a large average grain size, and an excellent iron loss property.

### Example 2

A steel slab having an ingredient composition comprising the ingredients shown in Table 3 and the balance being Fe and inevitable impurities was heated to 1050°C and hot rolled to form a hot-rolled sheet having a sheet thickness of 2.2 mm. The hot-rolled sheet is then pickled to remove scales on the surface of the hot-rolled sheet, subjected to hot-band annealing at 1050°C for 20 seconds, and then subjected to 7 passes of cold rolling with a Sendzimir rolling machine to form a cold-rolled sheet having a final sheet thickness of 0.25 mm. The cold rolling included 4 passes of unidirectional rolling to achieve an intermediate sheet thickness of 1.5 mm and an aging treatment of holding the sheet at room temperature (20°C) for 240 hours, and 7 passes of reverse rolling. The rolling reduction in each pass of the unidirectional rolling and the reverse rolling were adjusted to the same value.

The cold-rolled sheet was then subjected to finishing annealing at 950°C for 30 seconds in a wet atmosphere of 45 vol% H₂ + 55 vol% N₂ having a dew point of 55°C. The magnetic properties and average grain size of the resulting steel sheet after finishing annealing (product sheets) were measured also by the method of Example 1. The cold-rolled sheet after final cold rolling but before finishing annealing was subjected to local orientation analysis in the same manner as in Example 1, except that the measurement area was 500 µm in the RD direction and 250 µm in the ND direction and the step size was 0.25 µm (hexagonal grid), thereby obtaining the G_{b}/G_{g} ratio.

The above measurement results are also shown in Table 3. The results show that the steel sheets obtained by using the raw material having the ingredient composition in accordance with the invention and by cold rolling under the conditions in accordance with the present invention all have the G_{b}/G_{g} ratio of 1.03 or more, a large average grain size and an excellent iron loss property.

**Table 3**

| 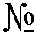 | Ingredient Composition (mass%) | | | | | | | | | | | | | Cold-rolled Sheet | Product Sheet | | Remarks |
|---|---|---|---|---|---|---|---|---|---|---|---|---|---|---|---|---|---|
| | C | Si | Mn | P | Al | N | S | Se | Ti | Nb | v | Sn | Sb | G_{b}/G_{g} | Grain Size(µm) | Iron Loss W_{15/50} (W/kg) | |
| 1 | 0.002 | 2.84 | 0.17 | - | - | - | - | - | - | - | - | - | - | 1.08 | 158 | 1.81 | Invention Example |
| 2 | 0.002 | 3.05 | 0.15 | 0.016 | - | - | - | - | - | - | - | - | - | 1.06 | 150 | 1.90 | Invention Example |
| 3 | 0.001 | 3.07 | 0.16 | - | 1.560 | - | - | - | - | - | - | - | - | 1.05 | 142 | 1.97 | Invention Example |
| 4 | 0.001 | 3.32 | 0.22 | - | - | 0.006 | - | - | - | - | - | - | - | 1.04 | 144 | 1.93 | Invention Example |
| 5 | 0.002 | 3.34 | 0.05 | - | - | - | 0.007 | - | - | - | - | - | - | 1.05 | 145 | 1.88 | Invention Example |
| 6 | 0.002 | 3.02 | 0.11 | - | - | - | - | 0.007 | - | - | - | - | - | 1.04 | 141 | 1.98 | Invention Example |
| 7 | 0.001 | 2.84 | 0.10 | - | - | - | - | - | 0.005 | - | - | - | - | 1.05 | 148 | 1.93 | Invention Example |
| 8 | 0.001 | 2.82 | 0.23 | - | - | - | - | - | 0.065 | - | - | - | - | 1.03 | 134 | 1.99 | Invention Example |
| 9 | 0.002 | 2.97 | 0.06 | - | - | - | - | - | - | 0.003 | - | - | - | 1.04 | 144 | 1.96 | Invention Example |
| 10 | 0.002 | 3.19 | 0.20 | - | - | - | - | - | - | 0.036 | - | - | - | 1.03 | 138 | 1.97 | Invention Example |
| 11 | 0.002 | 3.24 | 0.15 | - | - | - | - | - | - | - | 0.005 | - | - | 1.04 | 146 | 1.84 | Invention Example |
| 12 | 0.002 | 3.09 | 0.21 | - | - | - | - | - | - | - | 0.044 | - | - | 1.03 | 137 | 1.97 | Invention Example |
| 13 | 0.002 | 4.12 | 0.10 | - | - | - | - | - | - | - | - | 0.004 | - | 1.04 | 139 | 1.90 | Invention Example |
| 14 | 0.002 | 2.45 | 0.07 | - | - | - | - | - | - | - | - | - | 0.003 | 1.05 | 141 | 1.91 | Invention Example |
| 15 | 0.002 | 3.45 | 0.15 | - | - | - | - | - | - | - | - | 0.015 | 0.035 | 1.03 | 140 | 1.86 | Invention Example |
| 16 | 0.002 | 3.03 | 0.21 | - | - | - | - | - | - | - | - | 0.120 | 0.040 | 1.05 | 135 | 1.85 | Invention Example |
| 17 | 0.045 | 3.02 | 0.13 | - | - | - | - | - | - | - | - | - | - | 1.04 | 140 | 1.99 | Invention Example |
| 18 | 0.122 | 2.89 | 0.07 | - | - | - | - | - | - | - | - | - | - | 1.03 | 72 | 3.54 | Comparative Example |
| 19 | 0.002 | 0.82 | 0.07 | - | - | - | - | - | - | - | - | - | - | 1.06 | 160 | 2.54 | Comparative Example |
| 20 | 0.001 | 6.01 | 0.20 | - | - | - | - | - | - | - | - | - | - | Production impossible due to breakage in cold rolling | | | Comparative Example |
| 21 | 0.002 | 3.02 | 1.52 | - | - | - | - | - | - | - | - | - | - | 1.04 | 98 | 2.45 | Comparative Example |
| 22 | 0.001 | 3.05 | 0.02 | 0.035 | - | - | - | - | - | - | - | - | - | 1.03 | 90 | 2.49 | Comparative Example |
| 23 | 0.002 | 2.89 | 0.21 | - | 2.050 | - | - | - | - | - | - | - | - | 1.03 | 76 | 5.25 | Comparative Example |
| 24 | 0.001 | 3.24 | 0.10 | - | - | 0.011 | - | - | - | - | - | - | - | 1.03 | 85 | 5.14 | Comparative Example |
| 25 | 0.002 | 3.09 | 0.11 | - | - | - | 0.012 | - | - | - | - | - | - | 1.03 | 98 | 4.37 | Comparative Example |
| 26 | 0.001 | 3.02 | 0.07 | - | - | - | - | 0.015 | - | - | - | - | - | 1.04 | 95 | 5.45 | Comparative Example |
| 27 | 0.002 | 3.09 | 0.11 | - | - | - | - | - | 0.240 | - | - | - | - | 1.04 | 54 | 3.93 | Comparative Example |
| 28 | 0.001 | 3.02 | 0.07 | - | - | - | - | - | - | 0.180 | - | - | - | 1.04 | 74 | 4.08 | Comparative Example |
| 29 | 0.002 | 3.09 | 0.11 | - | - | - | - | - | - | - | 0.250 | - | - | 1.04 | 55 | 5.78 | Comparative Example |
| 30 | 0.002 | 3.10 | 0.11 | - | - | - | - | - | - | - | - | 0.210 | 0.240 | 1.04 | 66 | 5.34 | Comparative Example |

### Industrial Applicability

The method of the invention is applicable to the production of either non-oriented electrical steel sheets or oriented electrical steel sheets. The method can also be applied to the production of thin steel sheets for automobiles.

## Claims

1. A method for producing an electrical steel sheet comprising steps of
heating a steel slab having an ingredient composition comprising C: 0 to 0.100 mass%, Si: 1.00 to 5.00 mass%, Mn: 0 to 1.00 mass%, P: 0 to 0.02 mass%, Al: 0 to 2.00 mass%, N: 0 to 0.010 mass%, S: 0 to 0.010 mass%, Se: 0 to 0.010 mass%, Ti: 0 to 0.100 mass%, Nb: 0 to 0.100 mass%, V: 0 to 0.100 mass%, at least one selected from Sn and Sb: 0 to 0.200 mass% in total, and the balance being Fe and inevitable impurities to 1300°C or lower,
hot rolling the slab to form a hot-rolled sheet,
subjecting the hot-rolled sheet to hot-band annealing,
cold rolling the sheet to form a cold-rolled sheet having a final sheet thickness, and
subjecting the cold-rolled sheet to finishing annealing,
**characterized in that**
the cold rolling is conducted so that a ratio of G_{b} to G_{g} (G_{b}/G_{g}) is 1.03 or more, wherein: when crystal orientation of a worked grain present in a sheet thickness section of the cold-rolled sheet having the final sheet thickness is measured using an EBSD method,
K₁ (°) denotes an orientation difference between an arbitrary measurement point and a first neighboring measurement point;
K₂ (°) denotes an orientation difference between the same arbitrary measurement point and a second neighboring measurement point;
G (°) denotes a difference (K₂ -K₁) between K₁ and K₂;
G_{b} (°) denotes a value corresponding to G in a grain boundary vicinity; and
G_{g} (°) denotes a value corresponding to G in a grain interior,
provided that the term "worked grain" refers to a crystal grain that has been flattened by cold rolling and been thus elongated in the rolling direction; the term "grain boundary vicinity" refers to an area of 2.5 µm in the direction perpendicular to the steel sheet surface and 50 µm in the direction parallel to the steel sheet surface, originating from the grain boundary parallel to the sheet surface within the worked grain present in the thickness cross-section of the cold-rolled sheet; and "grain interior" refers to an area of 5 µm in a direction perpendicular to the steel sheet surface and 50 µm in a direction parallel to the steel sheet surface including the center point of the worked grain.

2. The method for producing an electrical steel sheet according to claim 1, wherein
the cold rolling to obtain the final sheet thickness is conducted by combining unidirectional rolling with reverse rolling.

3. The method for producing an electrical steel sheet according to the claim 1, wherein
the cold rolling to obtain the final sheet thickness is conducted by combining an aging treatment conducted within a temperature range of 20 to 300°C and reverse rolling.

4. A cold-rolled sheet used in a production of an electrical steel sheet cold-rolled to a final sheet thickness and,
**characterized in that**
a ratio of G_{b} to G_{g} (G_{b}/G_{g}) is 1.03 or more, wherein: when crystal orientation of a worked grain present in a sheet thickness section is measured using an EBSD method,
K₁ (°) denotes an orientation difference between an arbitrary measurement point and a first neighboring measurement point;
K₂ (°) denotes an orientation difference between the same arbitrary measurement point and a second neighboring measurement point;
G (°) denotes a difference (K₂ -K₁) between K₁ and K₂;
G_{b} (°) denotes a value corresponding to G in a grain boundary vicinity; and
G_{g} (°) denotes a value corresponding to G in a grain interior,
provided that the term "worked grain" refers to a crystal grain that has been flattened by cold rolling and been thus elongated in the rolling direction; the term "grain boundary vicinity" refers to an area of 2.5 µm in the direction perpendicular to the steel sheet surface and 50 µm in the direction parallel to the steel sheet surface, originating from the grain boundary parallel to the sheet surface within the worked grain present in the thickness cross-section of the cold-rolled sheet; and "grain interior" refers to an area of 5 µm in a direction perpendicular to the steel sheet surface and 50 µm in a direction parallel to the steel sheet surface, including the center point of the worked grain.
